# EUROPÄISCHE PATENTSCHRIFT

(11) **EP 4 327 219 B1**
(45) Veröffentlichungstag und Bekanntmachung des Hinweises auf die Patenterteilung: **14.08.2024**
(21) Anmeldenummer: 22721753.6
(22) Anmeldetag: 08.04.2022
(51) Int. Cl.: G06F 21/45, G06F 21/81, G06Q 50/06, H02J 13/00, H04L 9/40

(54) **VERFAHREN ZUR FESTLEGUNG VON AUTHENTIFIZIERUNGSDATEN EINES NUTZERS AN EINEM ENERGIEWANDLUNGSGERÄT UND ENERGIEWANDLUNGSGERÄT**
METHOD FOR DEFINING AUTHENTICATION DATA OF A USER AT AN ENERGY CONVERSION DEVICE, AND ENERGY CONVERSION DEVICE
PROCÉDÉ POUR ÉTABLIR DES DONNÉES D'AUTHENTIFICATION D'UN UTILISATEUR SUR UN APPAREIL DE CONVERSION D'ÉNERGIE ET APPAREIL DE CONVERSION D'ÉNERGIE

(30) Priorität: 21.04.2021 DE 102021110140
(43) Veröffentlichungstag der Anmeldung: 28.02.2024
(73) Patentinhaber: SMA Solar Technology AG, 34266 Niestetal (DE)
(72) Erfinder: HANKE, Ingo, 37073 Göttingen (DE); KLEIN, Jens, 37075 Goettingen (DE); SCHLOTE, Dirk, 34121 Kassel (DE); THIEL, Raimund, 34596 Bad Zwesten (DE); WISCHER, Mirko, 36251 Bad Hersfeld (DE)
(86) Internationale Anmeldenummer: PCT/EP2022/059490
(87) Internationale Veröffentlichungsnummer: WO 2022/223328

(56) Entgegenhaltungen:
- EP-A1- 2 808 820
- EP-A1- 3 217 695

## Beschreibung

Die Erfindung betrifft ein Verfahren zur Festlegung von Authentifizierungsdaten eines Nutzers an einem mit einem Netz und einer Quelle verbundenen Energiewandlungsgerät über eine Netzwerkverbindung. Weiterhin betrifft die Erfindung ein Energiewandlungsgerät, insbesondere in Form eines Wechselrichters, das zur Durchführung des Verfahrens eingerichtet ist.

Der Zugriff von Nutzern auf Energiewandlungsgeräte, insbesondere Wechselrichter, über einen Netzwerkverbindung ist eine weitverbreitete, für den Betrieb oder die Wartung häufig auch notwendige Funktion. Zur Authentifizierung des Nutzers, beispielsweise eines Eigentümers des Geräts oder eines Servicetechnikers, sind hierzu im Energiewandlungsgerät Authentifizierungsdaten des Nutzers hinterlegt, die bei einem Zugriffsversuch abgefragt werden. Dies kann beispielsweise ein Passwort sein, mit dem sich der Nutzer am Energiewandlungsgerät anmelden kann.

So ist beispielsweise in der Schrift US 2011/0184575 A1 beschrieben, dass in einem Smart Grid die Bereitstellung von elektrischer Leistung an einem Anschluss von einer erfolgreichen Authentifizierung eines Nutzers oder eines Geräts abhängig gemacht wird. Weiterhin beschreibt das Dokument JP 2008-108022 A ein gegen Missbrauch abgesichertes Verwaltungssystem zum Zweck der Wartung eines Geräts, bei dem sich ein Service-Techniker vorab unter Angabe eines Wartungsplans registriert und einzelne Komponenten des Wartungsplans zum Zeitpunkt der Wartung mittels jeweils der Komponente des Wartungsplans zugeordneten URL abruft. Das Dokument EP 2 808 820 A1 offenbart ein Verfahren zur Festlegung von Authentifizierungsdaten eines Nutzers an einem mit einem Netz und einer Quelle verbundenen Energiewandlungsgerät.

Jetzt kann es passieren, dass der Nutzer die Authentifizierungsdaten verliert oder vergisst oder andere, Nichtberechtigte Kenntnis von den Authentifizierungsdaten erhalten, was zur Folge hat, dass der Nutzer die Zugriffsrechte auf das Energiewandlungsgerät verlieren würde oder Nichtberechtigten Zugriff auf das Energiewandlungsgerät erhalten könnten. Daher besteht der Bedarf, ein Verfahren für den Nutzer bereitzustellen, über das er neue Authentifizierungsdaten an das Energiewandlungsgerät übertragen kann, sodass diese für spätere Zugriffsversuche akzeptiert werden. Solch ein Verfahren soll für den Nutzer einfach umsetzbar sein, gleichzeitig aber auch Sicherheitsanforderungen genügen, die verhindern, dass nicht berechtigte Nutzer das Verfahren missbrauchen können, um beispielsweise eigene Authentifizierungsdaten auf dem Energiewandlungsgerät zu hinterlegen, die für spätere Zugriffsversuche genutzt werden können, oder um berechtigte Nutzer aus dem Energiewandlungsgerät auszusperren.

Es ist daher Aufgabe dieser Erfindung, ein einfach umsetzbares, aber missbrauchssicheres Verfahren zur Festlegung von Authentifizierungsdaten eines Nutzers auf einem Energiewandlungsgerät bereitzustellen beziehungsweise ein Energiewandlungsgerät aufzuzeigen, das dazu eingerichtet ist, mit einem solchen Verfahren die Festlegung von Authentifizierungsdaten eines Nutzers zu ermöglichen.

Diese Aufgabe wird gelöst mit einem Verfahren mit den Merkmalen des Anspruchs 1, sowie mit einem Energiewandlungsgerät mit den Merkmalen des Anspruchs 13. Bevorzugte Ausführungsformen sind in den von diesen Ansprüchen abhängigen Ansprüchen aufgeführt.

In einem ersten Aspekt der Erfindung umfasst ein Verfahren zur Festlegung von Authentifizierungsdaten eines Nutzers an einem mit einem Netz und einer Quelle verbundenen Energiewandlungsgerät über eine Netzwerkverbindung die folgenden Schritte:
- Empfangen einer Aufforderung des Nutzers zur Neuvergabe von Authentifizierungsdaten durch das Energiewandlungsgerät über die Netzwerkverbindung,
- Empfangen von gewünschten Authentifizierungsdaten des Nutzers durch das Energiewandlungsgerät über die Netzwerkverbindung,
- dauerhaftes Hinterlegen der gewünschten Authentifizierungsdaten im Energiewandlungsgerät zur Authentifizierung des Nutzers bei folgenden Zugriffsversuchen auf das Energiewandlungsgerät nur unter der Voraussetzung, dass innerhalb eines ersten vorgegebenen Zeitfensters nach Empfangen der Aufforderung eine Trennung des Energiewandlungsgerät von dem verbundenen Netz erfolgt.

Die Aufforderung des Nutzers zur Neuvergabe von Authentifizierungsdaten und/oder die gewünschten Authentifizierungsdaten können hierbei Informationen zur Identität des Nutzers enthalten. Mithilfe der dauerhaft hinterlegten Authentifizierungsdaten kann sich der Nutzer nach Abschluss des Verfahrens zu einem späteren Zeitpunkt als berechtigter Nutzer an dem Energiewandlungsgerät anmelden. Die Authentifizierungsdaten können beispielsweise ein Passwort, ein Zertifikat, oder ein Token enthalten, die der Nutzer generiert hat.

Das Verfahren wird hierbei bevorzugt auf einem Kommunikationsprozessor des Energiewandlungsgerät durchgeführt, der die Netzwerkverbindung des Energiewandlungsgerät verwaltet. Der Kommunikationsprozessor kann hierfür bevorzugt wahlweise mit elektrischer Leistung aus dem Netz und der Quelle versorgt werden, sodass auch während der Trennung des Energiewandlungsgerät von dem Netz eine ausreichende Versorgung des Kommunikationsprozessors sichergestellt werden kann. Auch eine temporäre Versorgung des Kommunikationsprozessors während der Trennung vom Netz und/oder der Quelle durch eine in das Energiewandlungsgerät integrierte Energiequelle, beispielsweise durch eine Batterie, ist denkbar.

Durch die Verknüpfung des dauerhaften Hinterlegens der gewünschten Authentifizierungsdaten im Energiewandlungsgerät mit einer Trennung des Energiewandlungsgerät von dem verbundenen Netz innerhalb eines vorgegebenen Zeitfensters kann sichergestellt werden, dass sich der Nutzer in unmittelbarer Nähe des Energiewandlungsgeräts aufhalten muss, wenn er die Aufforderung zur Neuvergabe von Authentifizierungsdaten an das Energiewandlungsgerät schickt. Andernfalls wäre es ihm unmöglich, gezielt eine Trennung des Energiewandlungsgerät von dem verbundenen Netz innerhalb des vorgegebenen Zeitfensters zu bewirken. Der Nutzer kann hierbei die Aufforderung zur Neuvergabe von Authentifizierungsdaten mithilfe eines mobilen Datengerätes, beispielsweise eines Smartphones oder eines Laptops senden, während er sich in unmittelbarer Nähe zum Energiewandlungsgerät befindet. Anschließend trennt er manuell, beispielsweise durch Betätigen eines Trennschalters oder durch Auslösen einer Sicherung, das Energiewandlungsgerät vom verbundenen Netz.

Um sicherzustellen, dass ein vorübergehender Stromausfall nicht versehentlich dazu führt, dass eine missbräuchliche Aufforderung zur Neuvergabe von Authentifizierungsdaten durch einen nicht berechtigten Nutzer erfolgreich sein kann, kann zusätzlich ein Wiederverbinden des Energiewandlungsgeräts mit dem Netz innerhalb eines zweiten Zeitfensters relativ zum Zeitpunkt der Trennung des Energiewandlungsgerät von dem verbundenen Netz gefordert werden. Hierzu kann das zweites Zeitfenster bevorzugt so vorgegeben werden, dass es beispielsweise 10 Sekunden nach der Trennung des Energiewandlungsgerät von dem verbundenen Netz beginnt. Weiterhin kann die Dauer des zweiten Zeitfensters begrenzt werden, beispielsweise auf eine Dauer, die kleiner oder gleich 20 Sekunden ist. Auf diese Weise führen zufällig eintretende, kurzzeitige Stromausfälle des Netzes, die in der Regel weniger als 10 Sekunden dauern, ebenso wie längerfristige Stromausfälle, die länger als 30 Sekunden dauern, nicht zu einem erfolgreichen Hinterlegen von Authentifizierungsdaten durch einen nicht berechtigten Nutzer. Da es weitgehend unmöglich ist, aus der Ferne Stromausfälle gezielt herbeizuführen, die innerhalb des vorgegebenen ersten Zeitfensters beginnen und eine vom zweiten Zeitfenster definierte Dauer aufweisen, ist ein Missbrauch des Verfahrens auf diese Weise weitestgehend ausgeschlossen.

Es ist aber auch denkbar, dass lediglich eine Trennung des Energiewandlungsgeräts vom verbundenen Netz erforderlich ist, um ein dauerhaftes Hinterlegen der gewünschten Authentifizierungsdaten zu bewirken, und dass bis zum dauerhaften Hinterlegen des Energiewandlungsgerät vom Netz getrennt bleiben kann.

Um dem Nutzer die Durchführung der Trennung des Energiewandlungsgerät vom Netz beziehungsweise des Wiederverbindens des Energiewandlungsgerät mit dem Netz innerhalb des ersten Zeitfensters zu erleichtern, kann das Energiewandlungsgerät den Beginn und/oder das Ende des ersten Zeitfensters signalisieren. Eine solche Signalisierung kann auf optischem oder akustischem Wege erfolgen. Der Nutzer kann dann ein Trennorgan, typischerweise einen Trennschalter oder eine Sicherung, im angezeigten Zeitraum manuell betätigen. Wenn das Energiewandlungsgerät den Beginn und/oder das Ende des ersten Zeitfensters ohnehin signalisiert, kann der Beginn und/oder das Ende des Zeitfensters auch zufällig innerhalb eines vorgegebenen Wertebereichs gewählt werden. Dies erschwert den Missbrauch des Verfahrens weiter.

Ebenso kann der Beginn und das Ende des zweiten Zeitfensters optisch oder akustisch angezeigt werden, um dem Nutzer die Wahl des richtigen Zeitpunkts für ein Wiederverbinden des Energiewandlungsgeräts mit dem Netz zu erleichtern.

In einer vorteilhaften Variante kann das Empfangen der gewünschten Authentifizierungsdaten vor der Trennung des Energiewandlungsgerät von dem verbundenen Netz, insbesondere zusammen mit der Aufforderung zur Neuvergabe von Authentifizierungsdaten, erfolgen. In diesem Fall erfolgt ein dauerhaftes Hinterlegen der gewünschten Authentifizierungsdaten unmittelbar nach der Trennung beziehungsweise dem Wiederverbinden des Energiewandlungsgeräts von beziehungsweise mit dem Netz.

In einer weiteren vorteilhaften Variante kann gefordert werden, dass das Empfangen der gewünschten Authentifizierungsdaten innerhalb eines dritten vorgegebenen Zeitfensters nach der Trennung des Energiewandlungsgerät von dem verbundenen Netz erfolgen muss, um ein dauerhaftes Hinterlegen der gewünschten Authentifizierungsdaten im Energiewandlungsgerät zu erreichen. Der Beginn des Zeitfensters kann auf den Zeitpunkt der Trennung des Energiewandlungsgeräts vom Netz oder auch auf den Zeitpunkt des Wiederverbindens bezogen sein und mit einem dieser Zeitpunkte zusammenfallen oder eine vorgegebene Dauer später liegen. Um die Sicherheit des Verfahrens gegenüber Missbrauch in dieser Variante weiter zu erhöhen, kann definiert werden, dass das dritte vorgegebene Zeitfenster spätestens 10 Minuten nach der Trennung des Energiewandlungsgerät vom Netz endet.

Um eine weitere Möglichkeit zum Missbrauch des Verfahrens durch einen nicht berechtigten Nutzer zu unterbinden, kann gefordert werden, dass das Verfahren abgebrochen wird und empfangene gewünschten Authentifizierungsdaten verworfen werden, wenn ein Neustart eines in die Durchführung des Verfahrens eingebundenen Kommunikationsprozessors des Energiewandlungsgeräts innerhalb des ersten Zeitfensters erfolgt.

Weiterhin ist es zur Steigerung der Sicherheit gegenüber einem Missbrauch des Verfahrens möglich und sinnvoll, dass im Energiewandlungsgerät eine Anzahl aufeinanderfolgender Empfangsereignisse von Aufforderungen zur Neuvergabe von Authentifizierungsdaten erfasst werden, die nicht zu einem dauerhaften Hinterlegen der gewünschten Authentifizierungsdaten im Energiewandlungsgerät geführt haben, also eine Anzahl erfolgloser Aufforderungen, mitgezählt wird. Ein dauerhaftes Hinterlegen der gewünschten Authentifizierungsdaten im Energiewandlungsgerät wird dauerhaft oder für einen vorgegebenen Zeitraum verhindert, wenn die Anzahl eine Maximalanzahl überschreitet. Diese Maximalanzahl kann beispielsweise auf zwei oder drei festgelegt werden. Es wird hierbei allerdings empfohlen, die Sperrung des Verfahrens nur für einen vorgegebenen Zeitraum durchzuführen, um die Möglichkeit einer dauerhaften Sperrung eines berechtigten Nutzers durch missbräuchliche erfolglose Versuche zu unterbinden.

Zur Überwachung der Netzwerkverbindung des Energiewandlungsgeräts können Empfangsereignisse von Aufforderungen zur Neuvergabe von Authentifizierungsdaten durch das Energiewandlungsgerät über die Netzwerkverbindung an ein Portal gemeldet werden. Hierbei kann auch gemeldet werden, ob die Aufforderungen jeweils zu einem dauerhaften Hinterlegen der gewünschten Authentifizierungsdaten im Energiewandlungsgerät geführt haben oder erfolglos geblieben sind. Auf diese Weise werden Missbrauchsversuche schnell entdeckt und es kann auf eine solche Sicherheitsbedrohung geeignet reagiert werden.

In einem weiteren Aspekt der Erfindung ist ein Energiewandlungsgerät eingerichtet zur Durchführung des vorstehend beschriebenen Verfahrens. Das Energiewandlungsgerät kann hierbei ein Wechselrichter sein, wobei die Quelle eine Gleichstromquelle, insbesondere eine Batterie oder ein Photovoltaikgenerator ist. Das Energiewandlungsgerät ist hierbei vorteilhafterweise dazu eingerichtet, während einer Trennung vom Netz durch die Quelle versorgt zu werden. Es ist aber auch denkbar, im Energiewandlungsgerät eine eigene Energiequelle zur Versorgung des Kommunikationsprozessors vorzusehen, die während einer Trennung des Energiewandlungsgerät vom Netz und/oder von der Quelle im Rahmen des beschriebenen Verfahrens eine Versorgung des Kommunikationsprozessors sicherstellt.

Da mit dem Netz verbundene Energiewandlungsgeräte in der Regel ohnehin Sensorik aufweisen, die gestattet, eine aktive Verbindung zum Netz zu überwachen, ist zur Befähigung des Energiewandlungsgerät zur Durchführung des Verfahrens in der Regel auch keine zusätzliche Hardware erforderlich. Eine Anpassung der Kommunikations-Software, die beispielsweise auf einem eine Netzwerkverbindung des Energiewandlungsgeräts verwaltenden Kommunikationsprozessor ausführbar ist, ist in vielen Fällen ausreichend. Dies macht das erfindungsgemäße Verfahren auch aus Kostensicht attraktiv.

In einem derzeit nicht beanspruchten Aspekt der Erfindung kann die Prüfung auf Trennung von dem verbundenen Netz auch durch eine Prüfung ersetzt oder ergänzt werden, ob ein Betätigungssensor des Energiewandlungsgeräts in dem ersten vorgegebenen Zeitfenster betätigt wurde. Ein solcher Betätigungssensor kann ein Schalter oder ein Taster des Energiewandlungsgeräts sein. Besonders vorteilhaft ist eine Ausgestaltung des Betätigungssensors als Klopfsensor, so dass ein Klopfen an das Energiewandlungsgerät zu einem dauerhaften Hinterlegen der gewünschten Authentifizierungsdaten genutzt werden kann. Auf diese Weise kann ein Verschleiß eines Trennorgans zur Trennung des Energiewandlungsgeräts von dem Netz vermieden werden. Entsprechend umfasst ein Verfahren zur Festlegung von Authentifizierungsdaten eines Nutzers an einem mit einem Netz und einer Quelle verbundenen Energiewandlungsgerät über eine Netzwerkverbindung dann die folgenden Schritte:
- Empfangen einer Aufforderung des Nutzers zur Neuvergabe von Authentifizierungsdaten durch das Energiewandlungsgerät über die Netzwerkverbindung,
- Empfangen von gewünschten Authentifizierungsdaten des Nutzers durch das Energiewandlungsgerät über die Netzwerkverbindung,
- dauerhaftes Hinterlegen der gewünschten Authentifizierungsdaten im Energiewandlungsgerät zur Authentifizierung des Nutzers bei folgenden Zugriffsversuchen auf das Energiewandlungsgerät nur unter der Voraussetzung, dass innerhalb eines ersten vorgegebenen Zeitfensters nach Empfangen der Aufforderung ein Betätigen eines Betätigungssensors, insbesondere eines Klopfsensors, des Energiewandlungsgeräts erfolgt.

Die weiteren Ausgestaltungen, die im Rahmen der Beschreibung des erfindungsgemäßen Verfahrens offenbart sind, können in analoger Weise auch bei dieser Abwandlung des Verfahrens eingesetzt werden.

Im Folgenden wird die Erfindung mithilfe von Figuren näher erläutert, von denen
- Fig. 1: ein Ablaufdiagramm für eine erste Ausgestaltung des erfindungsgemäßen Verfahrens,
- Fig. 2: ein Ablaufdiagramm für eine zweite Ausgestaltung des erfindungsgemäßen Verfahrens und
- Fig. 3: einen exemplarischen Ablauf von Ereignissen bei einer Durchführung des erfindungsgemäßen Verfahrens zeigen.

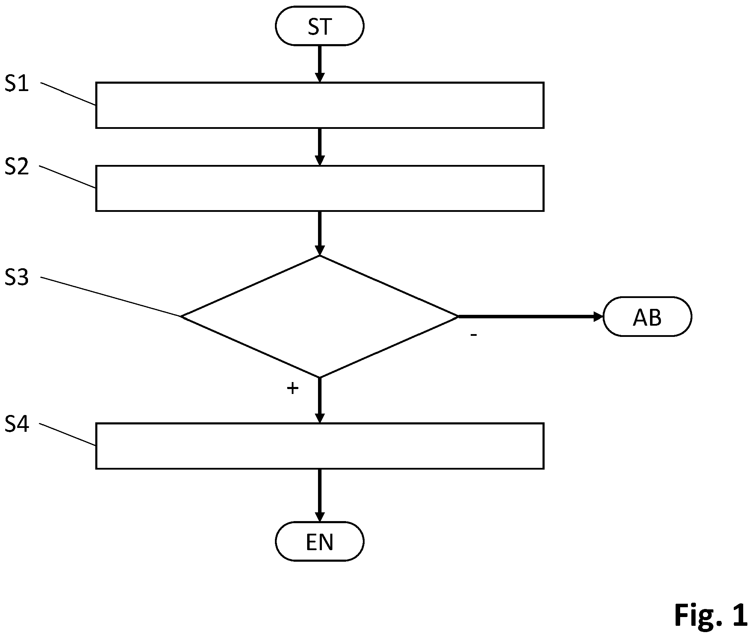

Fig. 1 zeigt ein Ablaufdiagramm für eine erste Ausgestaltung des erfindungsgemäßen Verfahrens. Das Verfahren beginnt (ST) mit einem ersten Schritt S1, in dem eine Aufforderung des Nutzers zur Neuvergabe von Authentifizierungsdaten auf dem Energiewandlungsgerät über die Netzwerkverbindung empfangen wird. In Reaktion auf den Empfang der Aufforderung kann das Energiewandlungsgerät die bisherigen Authentifizierungsdaten des Nutzers dauerhaft oder für einen vorgegebenen Zeitraum ungültig machen, wobei diese Reaktion auch davon abhängig gemacht werden kann, ob bereits vorher erfolglose Durchführungen des Verfahrens erfolgt sind. Die Reaktion kann auch davon abhängig gemacht werden, wie lange die letzte erfolgreiche Durchführung des Verfahrens für diesen Nutzer oder für Nutzer generell zurück liegt. Die bisherigen Nutzerdaten können aber auch gültig bleiben, um ein missbräuchliches Aussperren eines berechtigten Benutzers zu unterbinden.

In einem anschließenden zweiten Schritt S2 empfängt das Energiewandlungsgerät gewünschte Authentifizierungsdaten des Nutzers über die Netzwerkverbindung. Der erste Schritt S1 und der zweite Schritt S2 können nacheinander in getrennten Kommunikationsvorgängen oder auch gemeinsam in einem einzigen Kommunikationsvorgang erfolgen.

In einem dritten Schritt S3 wird anschließend geprüft, ob innerhalb eines ersten vorgegebenen Zeitfensters eine Trennung des Energiewandlungsgerät von dem verbundenen Netz erfolgt. Optional kann zusätzlich im dritten Schritt S3 auch geprüft werden, ob auch eine Wiederverbindung mit dem Netz innerhalb des ersten Zeitfensters erfolgt. Das erste Zeitfenster beginnt unmittelbar oder eine vorgegebene Dauer nach dem Empfang der Aufforderung. Ein zweites Zeitfenster innerhalb des ersten Zeitfensters legt die erlaubte Dauer der Trennung des Energiewandlungsgerätes vom verbundenen Netz fest, so dass die Dauer mindestens 10 Sekunden und maximal 30 Sekunden beträgt. Der Beginn des ersten Zeitfensters sowie optional auch das Ende des zweiten Zeitfensters kann von dem Energiewandlungsgerät zum Beispiel in akustischer Form oder in optischer Form angezeigt werden. Dies macht es einem an dem Energiewandlungsgerät befindlichen Nutzer einfacher, innerhalb des ersten Zeitfensters eine Trennung des Energiewandlungsgeräts vom Netz manuell durchzuführen, um die Aufforderung zur Neuvergabe von Authentifizierungsdaten zu verifizieren.

Nur dann, wenn die Prüfung des dritten Schritts S3 mit einem positiven Ergebnis abgeschlossen wird, also eine Trennung des Energiewandlungsgerät vom verbundenen Netz beziehungsweise gegebenenfalls auch eine Wiederverbindung mit dem Netz innerhalb des ersten Zeitfensters erfolgt ist, werden in einem vierten Schritt S4 die gewünschten Authentifizierungsdaten dauerhaft im Energiewandlungsgerät zur Authentifizierung des Nutzers bei folgenden Zugriffsversuchen auf das Energiewandlungsgerät anstelle der bisherigen Authentifizierungsdaten des Nutzers hinterlegt. Danach wird das Verfahren beendet (EN).

Im Falle eines negativen Ergebnisses der Prüfung des dritten Schritts S3 wird das Verfahren abgebrochen (AB).

Auch das erfolgreiche Beenden und/oder der Abbruch des Verfahrens kann von dem Energiewandlungsgerät optisch oder akustisch geeignet angezeigt werden.

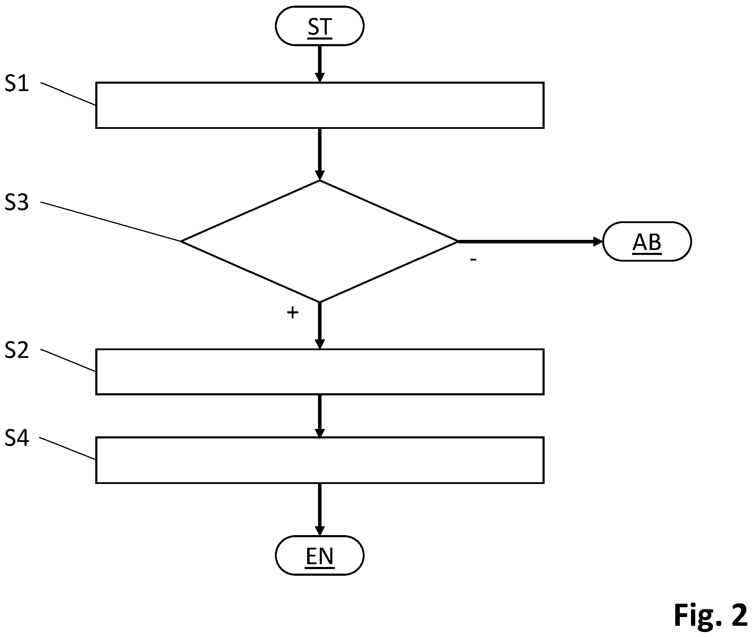

Fig. 2 zeigt ein Ablaufdiagramm für eine zweite Ausgestaltung des erfindungsgemäßen Verfahrens. Die zweite Ausgestaltung unterscheidet sich von der ersten Ausgestaltung des erfindungsgemäßen Verfahrens dadurch, dass der Empfang der gewünschten Authentifizierungsdaten des Nutzers am Energiewandlungsgerät entsprechend dem zweiten Schritt S2 erst nach einer erfolgreichen Durchführung der Prüfung entsprechend dem dritten Schritt S3 erfolgt. Für den Empfang der gewünschten Authentifizierungsdaten ist ein drittes Zeitfenster vorgesehen, das unmittelbar nach erfolgreichem Abschluss der Prüfung im Schritt S3 beginnen kann. Die Dauer des dritten Zeitfensters wird so bemessen, dass ein berechtigter Nutzer problemlos gewünschte Authentifizierungsdaten innerhalb des Zeitfensters an das Energiewandlungsgerät senden kann. Das Zeitfenster kann beispielsweise zwischen 1 und 10 Minuten dauern.

Der Abschluss der Prüfung im Schritt S3 mit positivem Ergebnis versetzt das Energiewandlungsgerät also vorübergehend in einen Zustand, in dem es die gewünschten Authentifizierungsdaten empfangen und dauerhaft im Energiewandlungsgerät hinterlegen kann, um sie für zukünftige Zugriffsversuche des Nutzers zu verwenden. Empfangene valide Authentifizierungsdaten werden in einem vierten Schritt S4 dauerhaft im Energiewandlungsgerät hinterlegt und das Verfahren wird beendet (EN). Werden innerhalb des dritten Zeitfensters keine validen Authentifizierungsdaten empfangen, wird das Verfahren beendet (EN), indem die bisherigen Authentifizierungsdaten weiterverwendet werden.

Falls die Prüfung im Schritt S3 mit negativem Ergebnis endet, werden etwaig empfangene gewünschte Authentifizierungsdaten des Nutzers ignoriert und das Verfahren wird abgebrochen (AB).

Neben dem in Verbindung mit der ersten Ausgestaltung beschriebenen Signalisieren des Beginns und/oder des Endes des ersten Zeitfensters kann das Energiewandlungsgerät in der zweiten Ausgestaltung zusätzlich auch Beginn und/oder Ende des zweiten Zeitfensters, sowie Beginn und/oder Ende des dritten Zeitfensters optisch oder akustisch signalisieren. Zusätzlich kann der erfolgreiche Abschluss des Verfahrens mit dem dauerhaften Hinterlegen der gewünschten Authentifizierungsdaten und/oder der Abbruch des Verfahrens ohne dauerhaftes Hinterlegen optisch oder akustisch angezeigt werden. Dies macht es dem Nutzer einfacher, die gewünschten Authentifizierungsdaten rechtzeitig an das Energiewandlungsgerät über die Netzwerkverbindung zu schicken und eine Rückmeldung über den erfolgreichen Abschluss der Neuvergabe der Authentifizierungsdaten zu erhalten.

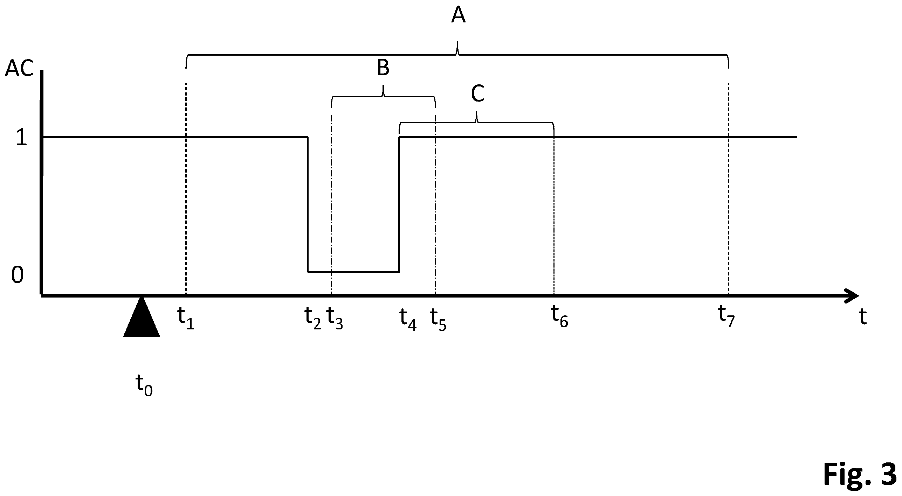

Der zeitliche Ablauf von Ereignissen für eine erfolgreiche Durchführung des erfindungsgemäßen Verfahrens ist genauer in Fig. 3 dargestellt, wobei auf der x-Achse die Zeit und auf der y-Achse der Verbindungszustand des Energiewandlungsgerät mit dem Netz aufgetragen ist. Eine Verbindung des Energiewandlungsgerät mit dem Netz ist mit dem Wert 1, eine Trennung vom Netz mit dem Wert 0 symbolisiert. Zum Zeitpunkt t₀ empfängt das Energiewandlungsgerät eine Aufforderung des Nutzers zur Neuvergabe von Authentifizierungsdaten. Hierdurch wird ein vom Zeitpunkt t₁ bis zum Zeitpunkt t₇ reichendes erstes Zeitfenster A definiert, innerhalb dessen eine Trennung und gegebenenfalls auch ein Wiederverbinden des Energiewandlungsgerät mit dem Netz erfolgen muss, um eine Neuvergabe der Authentifizierungsdaten zu bewirken. Der Zeitpunkt t₁ liegt hierbei eine vorgegebene Zeitdauer nach dem Zeitpunkt t₀, beispielsweise 10 Sekunden danach, oder kann auch identisch mit dem Zeitpunkt to sein. Der Zeitpunkt t₇ kann dann beispielsweise 20 Minuten nach dem Zeitpunkt t₀ (oder nach dem Zeitpunkt t₁) liegen.

Tatsächlich erfolgt die Trennung vom Netz in dem dargestellten Fall zum Zeitpunkt t₂.

Hierdurch wird wiederum ein zweites Zeitfenster B definiert, beginnend zum Zeitpunkt t₃ und endend zum Zeitpunkt t₅, innerhalb dessen ein Wiederverbinden des Energiewandlungsgerät mit dem Netz erfolgen muss, um eine Neuvergabe der Authentifizierungsdaten zu bewirken. Der Zeitpunkt t₃ liegt hierbei eine vorgegebene Zeitdauer nach dem Zeitpunkt t₂, beispielsweise 10 Sekunden danach. Der Zeitpunkt t₅ kann dann beispielsweise 30 Sekunden nach dem Zeitpunkt t₂ oder auch nach dem Zeitpunkt t₃ liegen.

Tatsächlich erfolgt das Wiederverbinden mit dem Netz in dem dargestellten Fall zum Zeitpunkt t₄. Hierdurch wird wiederum ein drittes Zeitfenster C definiert, beginnend zum Zeitpunkt t₄ und endend zum Zeitpunkt t₆, innerhalb dessen ein Empfangen von gewünschten Authentifizierungsdaten des Nutzers durch das Energiewandlungsgerät erfolgen muss, um eine Neuvergabe der Authentifizierungsdaten zu bewirken. Der Zeitpunkt t₆ kann dann beispielsweise 2 Minuten nach dem Zeitpunkt t₄ (oder nach dem Zeitpunkt t₂) liegen.

Wenn eines der erforderlichen Ereignisse, das Trennen des Energiewandlungsgerät vom Netz, das Wiederverbinden mit dem Netz und das Empfangen der gewünschten Authentifizierungsdaten, nicht innerhalb der entsprechenden Zeitfenster A, B, C erfolgt, erfolgt auch kein dauerhaftes Hinterlegen der gewünschten Authentifizierungsdaten im Energiewandlungsgerät zur Authentifizierung des Nutzers bei folgenden Zugriffsversuchen.

Bei der ersten Ausgestaltung des Verfahrens ist ein Empfangen der gewünschten Authentifizierungsdaten innerhalb des Zeitfensters C nicht erforderlich, da die Authentifizierungsdaten ja bereits vor der Trennung des Energiewandlungsgerät von dem verbundenen Netz durch das Energiewandlungsgerät empfangen worden sind.

Beginn und Ende der Zeitfenster A und B können von dem Energiewandlungsgerät in optischer oder akustischer Form, bevorzugt unterscheidbar voneinander, angezeigt werden. Auch das erfolgte Hinterlegen der gewünschten Authentifizierungsdaten kann in akustischer oder optischer Form angezeigt werden.

Das erfindungsgemäße Verfahren kann durch dem Fachmann bekannte weitere Maßnahmen zur Erhöhung der Sicherheit gegen Missbrauch ergänzt werden, beispielsweise durch eine verschlüsselte Übertragung von Daten zwischen Nutzer und Energiewandlungsgerät, eine 2-Faktor-Authentifizierung oder ähnliche Maßnahmen.

## Patentansprüche

1. Verfahren zur Festlegung von Authentifizierungsdaten eines Nutzers an einem mit einem Netz und einer Quelle verbundenen Energiewandlungsgerät über eine Netzwerkverbindung, umfassend die Schritte:
- Empfangen einer Aufforderung des Nutzers zur Neuvergabe von Authentifizierungsdaten durch das Energiewandlungsgerät über die Netzwerkverbindung (S1),
- Empfangen von gewünschten Authentifizierungsdaten des Nutzers durch das Energiewandlungsgerät über die Netzwerkverbindung (S2),
- dauerhaftes Hinterlegen der gewünschten Authentifizierungsdaten im Energiewandlungsgerät zur Authentifizierung des Nutzers bei folgenden Zugriffsversuchen auf das Energiewandlungsgerät (S4) nur unter der Voraussetzung, dass innerhalb eines ersten vorgegebenen Zeitfensters (A) nach Empfangen der Aufforderung eine Trennung des Energiewandlungsgerät von dem verbundenen Netz erfolgt (S3).

2. Verfahren nach Anspruch 1, wobei das Empfangen der gewünschten Authentifizierungsdaten (S2) vor der Trennung des Energiewandlungsgerät von dem verbundenen Netz erfolgen muss, um ein dauerhaftes Hinterlegen der gewünschten Authentifizierungsdaten im Energiewandlungsgerät zu erreichen.

3. Verfahren nach Anspruch 1, wobei das Empfangen der gewünschten Authentifizierungsdaten (S2) innerhalb eines dritten vorgegebenen Zeitfensters (C) nach der Trennung des Energiewandlungsgerät von dem verbundenen Netz erfolgen muss, um ein dauerhaftes Hinterlegen der gewünschten Authentifizierungsdaten im Energiewandlungsgerät (S4) zu erreichen.

4. Verfahren nach Anspruch 3, wobei das dritte vorgegebene Zeitfenster (C) nach einer vorgegebenen Zeitdauer, insbesondere spätestens 10 Minuten, nach der Trennung des Energiewandlungsgeräts von dem verbundenen Netz endet.

5. Verfahren nach einem der vorhergehenden Ansprüche, wobei innerhalb des ersten vorgegebenen Zeitfensters (A) auch ein Wiederverbinden des Energiewandlungsgerät mit dem verbundenen Netz innerhalb eines zweiten Zeitfensters (B) relativ zum Zeitpunkt der Trennung des Energiewandlungsgeräts von dem verbundenen Netz erfolgen muss, um ein dauerhaftes Hinterlegen der gewünschten Authentifizierungsdaten im Energiewandlungsgerät (S4) zu bewirken.

6. Verfahren nach Anspruch 5, wobei das zweite Zeitfenster (B) frühestens 10 Sekunden nach der Trennung des Energiewandlungsgeräts von dem verbundenen Netz beginnt.

7. Verfahren nach Anspruch 5 oder 6, wobei das zweite Zeitfenster (B) eine Dauer aufweist, die kleiner oder gleich 20 Sekunden ist.

8. Verfahren nach einem der vorhergehenden Ansprüche, wobei das erste vorgegebene Zeitfenster (A) spätestens 20 Minuten nach dem Empfangen der Aufforderung zur Neuvergabe von Authentifizierungsdaten am Energiewandlungsgerät endet.

9. Verfahren nach einem der vorhergehenden Ansprüche, wobei das Energiewandlungsgerät den Beginn und das Ende des ersten Zeitfensters (A) und/oder des zweiten Zeitfensters (B) signalisiert.

10. Verfahren nach einem der vorhergehenden Ansprüche, wobei das Verfahren abgebrochen wird und empfangene gewünschten Authentifizierungsdaten verworfen werden, wenn ein Neustart eines in eine Ausführung des Verfahrens eingebundenen Kommunikationsprozessors des Energiewandlungsgeräts erfolgt.

11. Verfahren nach einem der vorhergehenden Ansprüche, wobei im Energiewandlungsgerät eine Anzahl aufeinanderfolgender Empfangsereignisse von Aufforderungen zur Neuvergabe von Authentifizierungsdaten bestimmt werden, die nicht zu einem dauerhaften Hinterlegen der gewünschten Authentifizierungsdaten im Energiewandlungsgerät geführt haben, und wobei ein dauerhaftes Hinterlegen der gewünschten Authentifizierungsdaten im Energiewandlungsgerät (S4) dauerhaft oder für einen vorgegebenen Zeitraum verhindert wird, wenn die Anzahl eine Maximalanzahl überschreitet.

12. Verfahren nach einem der vorhergehenden Ansprüche, wobei Empfangsereignisse von Aufforderungen zur Neuvergabe von Authentifizierungsdaten bestimmt werden, die nicht zu einem dauerhaften Hinterlegen der gewünschten Authentifizierungsdaten im Energiewandlungsgerät geführt haben durch das Energiewandlungsgerät über die Netzwerkverbindung an ein Portal gemeldet werden.

13. Energiewandlungsgerät, eingerichtet zur Durchführung des Verfahrens nach einem der vorhergehenden Ansprüche.

14. Energiewandlungsgerät nach Anspruch 13, ausgeführt als Wechselrichter, wobei die Quelle eine Gleichstromquelle, insbesondere eine Batterie oder ein Photovoltaikgenerator ist.

15. Energiewandlungsgerät nach Anspruch 13 oder 14, dazu eingerichtet, während einer Trennung vom Netz durch die Quelle versorgt zu werden.

## Claims

1. A method for defining authentication data of a user at an energy conversion device connected to a grid and a source via a network connection, comprising the steps of:
- receiving, via the network connection, a request from a user to newly assign authentication data (S1);
- receiving, by the energy conversion device, desired authentication data of the user via the network connection (S2);
- permanently storing the desired authentication data in the energy conversion device for the authentication of the user in the event of subsequent attempts to access the energy conversion device (S4), only on condition that the energy conversion device is disconnected from the connected grid (S3) within a first predefined time window after receiving the request.

2. The method as claimed in claim 1, wherein the desired authentication data must be received (S2) before the disconnection of the energy conversion device from the connected grid in order to achieve permanent storage of the desired authentication data in the energy conversion device

3. The method as claimed in claim 1, wherein the desired authentication data must be received (S2) within a third predefined time window (C) after the disconnection of the energy conversion device from the connected grid in order to achieve permanent storage of the desired authentication data in the energy conversion device.

4. The method as claimed in claim 3, wherein the third predefined time window (C) ends after a predefined time duration, in particular 10 minutes at the latest, after the disconnection of the energy conversion device from the connected grid.

5. The method as claimed in one of the preceding claims, wherein, within the predefined first time window (A), the energy conversion device must also be reconnected to the connected grid within a second time window (B) relative to the time of the disconnection of the energy conversion device from the connected grid in order to effect permanent storage of the desired authentication data in the energy conversion device (S4).

6. The method as claimed in claim 5, wherein the second time window (B) starts 10 seconds at the earliest after the disconnection of the energy conversion device from the connected grid.

7. The method as claimed in claim 5 or 6, wherein the second time window (B) has a duration which is equal to or less than 20 seconds.

8. The method as claimed in one of the preceding claims, wherein the first predefined time window (A) ends 20 minutes at the latest after the request to newly allocate authentication data has been received on the energy conversion device.

9. The method as claimed in one of the preceding claims, wherein the energy conversion device signals the start and end of the first time window (A) and/or of the second time window (B).

10. The method as claimed in one of the preceding claims, wherein the method is terminated and received desired authentication data are discarded if a communication processor of the energy conversion device involved in carrying out the method is restarted.

11. The method as claimed in one of the preceding claims, wherein the number of consecutive receive events involving requests to newly allocate authentication data is determined in the energy conversion device, said requests not having resulted in permanent storage of the desired authentication data in the energy conversion device, and wherein permanent storage of the desired authentication data in the energy conversion device (S4) is prevented permanently or for a predefined time period if the number exceeds a maximum number.

12. The method as claimed in one of the preceding claims, wherein receive events involving requests to newly allocate authentication data are determined, said requests not having resulted in permanent storage of the desired authentication data in the energy conversion device, and are reported by the energy conversion device via the network connection to a portal.

13. An energy conversion device configured to perform the method as claimed in one of the preceding claims.

14. The energy conversion device as claimed in claim 13, implemented as an inverter, wherein the source is a direct-current source, in particular a battery or photovoltaic generator.

15. The energy conversion device as claimed in claim 13 or 14, configured to be supplied by the source during a disconnection from the grid.

## Revendications

1. Procédé de définition de données d'authentification d'un utilisateur sur un dispositif de conversion d'énergie connecté à un réseau et à une source par l'intermédiaire d'une connexion réseau, comprenant les étapes consistant à :
- Réception d'une demande de l'utilisateur de réattribuer des données d'authentification par le dispositif de conversion d'énergie via la connexion réseau (S1),
- réception de données d'authentification souhaitées de l'utilisateur par le dispositif de conversion d'énergie via la connexion réseau (S2),
- enregistrement permanent des données d'authentification souhaitées dans l'appareil de conversion d'énergie pour l'authentification de l'utilisateur lors des tentatives d'accès suivantes à l'appareil de conversion d'énergie (S4) uniquement à condition qu'une déconnexion de l'appareil de conversion d'énergie du réseau connecté ait lieu (S3) dans une première fenêtre de temps prédéfinie (A) après la réception de l'invitation.

2. Procédé selon la revendication 1, dans lequel la réception des données d'authentification souhaitées (S2) doit avoir lieu avant la déconnexion du dispositif de conversion d'énergie du réseau connecté, afin d'obtenir un enregistrement durable des données d'authentification souhaitées dans le dispositif de conversion d'énergie.

3. Procédé selon la revendication 1, dans lequel la réception des données d'authentification souhaitées (S2) doit avoir lieu dans une troisième fenêtre temporelle prédéterminée (C) après la déconnexion du dispositif de conversion d'énergie du réseau connecté, afin d'obtenir un dépôt permanent des données d'authentification souhaitées dans le dispositif de conversion d'énergie (S4).

4. Procédé selon la revendication 3, dans lequel la troisième fenêtre temporelle prédéterminée (C) se termine après une durée prédéterminée, notamment au plus tard 10 minutes, après la déconnexion du dispositif de conversion d'énergie du réseau connecté.

5. Procédé selon l'une quelconque des revendications précédentes, dans lequel, à l'intérieur de la première fenêtre temporelle prédéterminée (A), une reconnexion du dispositif de conversion d'énergie au réseau connecté doit également avoir lieu à l'intérieur d'une deuxième fenêtre temporelle (B) relative à l'instant de la déconnexion du dispositif de conversion d'énergie du réseau connecté, afin de provoquer un dépôt permanent des données d'authentification souhaitées dans le dispositif de conversion d'énergie (S4).

6. Procédé selon la revendication 5, dans lequel la deuxième fenêtre temporelle (B) commence au plus tôt 10 secondes après la déconnexion du dispositif de conversion d'énergie du réseau connecté.

7. Procédé selon la revendication 5 ou 6, dans lequel la deuxième fenêtre temporelle (B) a une durée inférieure ou égale à 20 secondes.

8. Procédé selon l'une quelconque des revendications précédentes, dans lequel la première fenêtre temporelle prédéterminée (A) se termine au plus tard 20 minutes après la réception de la demande de réattribution de données d'authentification au niveau du dispositif de conversion d'énergie.

9. Procédé selon l'une des revendications précédentes, dans lequel le dispositif de conversion d'énergie signale le début et la fin de la première fenêtre temporelle (A) et/ou de la deuxième fenêtre temporelle (B).

10. Procédé selon l'une des revendications précédentes, dans lequel le procédé est interrompu et les données d'authentification souhaitées reçues sont rejetées lorsqu'un redémarrage d'un processeur de communication du dispositif de conversion d'énergie impliqué dans une exécution du procédé a lieu.

11. Procédé selon l'une des revendications précédentes, dans lequel on détermine dans le dispositif de conversion d'énergie un nombre d'événements de réception successifs de demandes de réattribution de données d'authentification qui n'ont pas conduit à un dépôt permanent des données d'authentification souhaitées dans le dispositif de conversion d'énergie, et dans lequel on empêche un dépôt permanent des données d'authentification souhaitées dans le dispositif de conversion d'énergie (S4) de manière permanente ou pendant une durée prédéterminée si le nombre dépasse un nombre maximal.

12. Procédé selon l'une des revendications précédentes, dans lequel des événements de réception de demandes de réattribution de données d'authentification qui n'ont pas conduit à un dépôt permanent des données d'authentification souhaitées dans l'appareil de conversion d'énergie sont déterminés et signalés par l'appareil de conversion d'énergie à un portail via la connexion réseau.

13. Appareil de conversion d'énergie agencé pour mettre en oeuvre le procédé selon l'une des revendications précédentes.

14. Appareil de conversion d'énergie selon la revendication 13, réalisé sous la forme d'un onduleur, dans lequel la source est une source de courant continu, notamment une batterie ou un générateur photovoltaïque.

15. Appareil de conversion d'énergie selon la revendication 13 ou 14, agencé pour être alimenté par la source lors d'une déconnexion du réseau.
